# EUROPÄISCHE PATENTSCHRIFT

(11) **EP 3 707 376 B1**
(45) Veröffentlichungstag und Bekanntmachung des Hinweises auf die Patenterteilung: **28.07.2021**
(21) Anmeldenummer: 18785945.9
(22) Anmeldetag: 11.10.2018
(51) Int. Cl.: F04B 11/00, F16L 55/053

(54) **PULSATIONSDÄMPFUNGSSYSTEM**
PULSATION DAMPING SYSTEM
SYSTÈME D'AMORTISSEUR DE PULSATION

(30) Priorität: 10.11.2017 DE 102017126357
(43) Veröffentlichungstag der Anmeldung: 16.09.2020
(73) Patentinhaber: MHWirth GmbH, 41812 Erkelenz (DE)
(72) Erfinder: JANSEN, Roman, 41849 Wassenberg (DE)
(74) Vertreter: Zacco Norway AS
(86) Internationale Anmeldenummer: PCT/EP2018/077721
(87) Internationale Veröffentlichungsnummer: WO 2019/091691

(56) Entgegenhaltungen:
- WO-A1-2013/112713
- DE-A1- 4 318 553
- DE-U1-202007 015 412
- US-A- 2 731 984
- US-A- 3 972 364
- US-A- 4 080 996
- US-A- 4 427 029
- US-A- 5 732 740

## Beschreibung

Die Erfindung betrifft ein Pulsationsdämpfungssystem zum Reduzieren von Druckschwingungen in Rohrleitungen, insbesondere im Ansaug- und/oder Hochdruckbereich von Kolbenpumpen, insbesondere zur Förderung von Fluiden mit Festkörperanteilen, mit einem in einer Hauptrohrleitung, insbesondere einer Förderleitung, angeordneten Volumenänderungskörper, und einem mit dem Volumenänderungskörper über zumindest eine von der Hauptrohrleitung fluidisch getrennte Nebenrohrleitung fluidisch verbundenen Volumenspeicherbehälter.

Solche Pulsationsdämpfungssysteme sind in zahlreichen Varianten bekannt und werden üblicherweise in Rohrleitungssystemen eingesetzt, in denen es zu - beispielsweise durch den Betrieb einer Pumpe, eines Stellglieds oder aufgrund anderer Strömungseinflüsse hervorgerufenen - Druckschwingungen oder Druckstößen kommen kann. Beispielsweise kommt es bei einem Betrieb von Kolbenpumpen prinzipbedingt durch die oszillierende Bewegung der Pumpenkolben zu ungleichförmigen Volumenströmen sowohl im Ansaugtrakt als auch am Auslass der Pumpe. Diese ungleichförmigen Volumenströme führen zu Druckpulsationen, die negative Auswirkungen auf die Funktionsweise der Pumpe haben und im angrenzenden Rohrleitungssystem zu unerwünschten Schwingungen führen können. Im Ansaugtrakt der Pumpe können diese Pulsationen eine Kavitation hervorrufen, was einerseits zur Reduzierung des Wirkungsgrades der Pumpe und andererseits zu Schäden an der Pumpe führen kann.

Bekannte Pulsationsdämpfer umfassen zumeist eine mit einem kompressiblen Gasvolumen befüllte Kammer, die fluidisch mit dem pulsierenden Druckraum verbunden ist. Diese Dämpfer wirken derart, dass eine Druckerhöhung durch eine Komprimierung des in der Kammer befindlichen Gasvolumens ausgeglichen wird. Da das Gas aufgrund seiner hohen Kompressibilität im Vergleich zum Fluid dabei nur eine geringe Druckänderungen aufweist, können somit Druckpulsationen aufgrund der aufgeprägten Volumenstrompulsationen reduziert werden.

Aus der EP 0 679 832 A1 ist beispielsweise eine Ausgestaltung eines Dämpfungssystems bekannt, bei dem zum Reduzieren von Druckpulsationen in einer Rohrleitung ein mittels einer Ausgleichskammer sowie einer darin angeordneten flexiblen Membran gebildeter Volumenänderungsbereich ausgebildet ist. Ein mittels der Membran von dem in der Rohrleitung strömenden Fluid getrenntes Volumenspeichermedium ist zum Ausgleichen eines Volumens durch eine Öffnung mit einem Druckausgleichsbehälter verbunden. Eine solche Ausgestaltung ist zwar zur Dämpfung von relativ geringen Druckschwingungen geeignet, nicht jedoch zur Dämpfung von relativ großen, insbesondere durch Kolbenpumpen erzeugte, Druckstößen.

Darüber hinaus ist der Einsatz bekannter Pulsationsdämpfer bei zu fördernden Fluiden mit Festkörperanteilen nur bedingt möglich, da die zumeist mit einer Hauptförderleitung verbundenen Drosselwiderstände, Ausgleichskammern oder andere druckdämpfende Komponenten entweder aufgrund der geschaffenen Engstelle zu Verstopfungen neigen oder zur Vermeidung einer Verstopfung derart groß gewählt werden müssen, dass die Dämpfungswirkung deutlich abnimmt.

Ferner sind die im Fluid enthaltenen Festkörperanteile oftmals sehr abrasiv, so dass eine Drosselstelle beim Durchströmen solcher Festkörper schnell verschleißen kann, was wiederum die Funktionsweise des Dämpfers negativ beeinflusst.

Das Dokument DE 20 2007 015412 offenbart ein Pulsationsdämpfersystem gemäß des Oberbegriffs des Anspruchs 1.

Aufgabe der vorliegenden Erfindung ist es daher, ein System zum Reduzieren von Druckschwingungen in Rohrleitungen bereitzustellen, das zumindest einen der oben genannten Nachteile verbessert, und insbesondere einen effektiven und langlebigen Einsatz im Bereich von Pumpen zur Förderung von Fluiden mit Festkörperanteilen, insbesondere sogenannten Schlammpumpen, ermöglicht.

Die Erfindung löst die gestellte Aufgabe durch ein Pulsationsdämpfungssystem mit den Merkmalen des Hauptanspruchs. Vorteilhafte Ausgestaltungen und Weiterbildungen der Erfindung sind in den Unteransprüchen, der Beschreibung sowie den Figuren offenbart.

Erfindungsgemäß ist bei dem Pulsationsdämpfungssystem in der zumindest einen Nebenrohrleitung zumindest ein Drosselventil angeordnet. Dadurch können besonders große Druckstöße und Druckschwankungen besonders effektiv kompensiert und ausgeglichen werden. Ferner kann - bei gleichbleibender Wirkung - ein Verstopfen eines Drosselwiderstands, einer Ausgleichskammer oder einer anderen druckdämpfende Komponente in besonders effektiver Weise verhindert werden, so dass das erfindungsgemäße System auch für Fördersysteme zum Fördern von Fluiden mit Festkörperanteilen besonders geeignet ist. In der Nebenrohrleitung ist besonders bevorzugt ein im Wesentlichen inkompressibles Sperrfluid, wie beispielsweise ein Hydrauliköl, angeordnet. Das Sperrfluid ist insbesondere durch den Volumenänderungskörper von dem zu fördernden Fluidmedium, insbesondere ein Fluid mit Festkörperanteil, fluidisch getrennt. Das Sperrfluid kann somit in Richtung von dem Volumenänderungskörper zu dem Volumenspeicherbehälter, oder auch Ausgleichsbehälter genannt, und/oder umgekehrt strömen. So kann beispielsweise bei einem Auftreten eines Druckstoßes in der Hauptrohrleitung der darin befindliche Volumenänderungskörper derart verlagert oder in seiner Volumenausdehnung verändert werden, dass der Druckstoß nahezu verlustfrei von dem Fluidmedium auf das Sperrfluid übertragen wird, und das Sperrfluid für ein "Abfangen" des Druckstoßes zumindest teilweise von dem Volumenänderungskörper durch die in der Nebenrohrleitung befindliche Drossel in den Volumenspeicherbehälter gezwungen wird, und in dem Volumenspeicherbehälter eine Ausdehnung oder Vergrößerung des darin befindlichen Anteils oder Volumens des Sperrfluids bewirkt wird. Dadurch kann der Druckstoß in besonders einfacher Weise von dem Fluidmedium auf das Sperrfluid übertragen und sodann sowohl beim Durchströmen des Sperrfluid durch die Drossel als auch durch die Verlagerung des Volumens des Sperrfluids aus der Hauptrohrleitung in den Volumenspeicherbehälter gedämpft werden. Beim Durchströmen der Drossel kann insbesondere ein Teil der Pulsationsenergie durch den Druckverlust im Strömungswiderstand in Wärme umgewandelt werden. Nach diesem "Abfangen" des Druckstoßes und einem Absinken des in der Hauptrohrleitung herrschenden Drucks auf einen Standarddruck, der bevorzugt unterhalb des in der Nebenrohrleitung herrschenden Drucks liegt, erfolgt bevorzugt ein Zurückströmen des Sperrfluides aus dem Volumenspeicherbehälter in Richtung des Volumenänderungskörpers, sodass der Volumenänderungskörper gemäß einer Druckangleichung wieder in eine Standardposition ausgedehnt oder verlagert wird. Gleichzeitig nimmt der Anteil oder das Volumen des in dem Volumenspeicherbehälter befindlichen Sperrfluids ab. Aufgrund dieser Ausgestaltung eignet sich das vorliegende Pulsationsdämpfungssystem insbesondere zur Anwendung in Rohrleitungssystemen zur Förderung von Fluiden mit Feststoffanteilen.

Vorzugsweise weist die Nebenrohrleitung einen als Ableitung dienenden ersten Nebenrohrleitungsabschnitt, einen separat ausgebildeten als Zuleitung dienenden zweiten Nebenrohrleitungsabschnitt und/oder einen separat ausgebildeten als Zu- und Ableitung dienenden dritten Nebenrohrleitungsabschnitt auf. Dadurch kann insbesondere ein Strömungskreislauf des Sperrfluids gebildet sein, der ein Temperieren, insbesondere ein Kühlen des in der zumindest einen Drossel erwärmten Sperrfluids ermöglicht. So kann mittels der Nebenrohrleitungsabschnitte - insbesondere bei einem relativ geringen Volumenstrom oder bei einer relativ geringen Strömungsmasse des Sperrfluids - beispielsweise ein derart großer Kreislauf gebildet sein, dass ein die Drossel durchströmter Sperrfluidanteil zunächst eine gewisse Passage durch die Nebenrohrleitungen passieren muss und hierbei die in der Drossel aufgenommene Wärme wieder abgeben kann, bevor "derselbe" Sperrfluidanteil erneut durch die Drossel strömt und hierbei wiederum Wärme aufnehmen kann. Es kann folglich insbesondere eine möglichst lange Verweildauer des Sperrfluids in einem Bereich, in dem keine weitere Erwärmung des Sperrfluids erfolgt, realisiert werden. Dadurch kann insbesondere eine lokale Überhitzung des Sperrfluids vermieden werden.. Dazu ist beispielsweise eine Regelung der Strömungsrichtung des Sperrfluids ermöglicht; insbesondere kann das Sperrfluid gezielt durch zuvor bestimmte Nebenrohrleitungsabschnitte gelenkt werden. Beispielsweise kann das Sperrfluid besonders schnell, das heißt auf kurzem Wege, oder alternativ auf einem besonders langem Wege von dem Volumenänderungskörper zu dem Volumenspeicherbehälter und/oder umgekehrt strömen und/oder wahlweise einzelne oder mehrere Nebenrohrleitungsabschnitte und/oder einzelne oder mehrere darin angeordnete Drosselventile zur Dämpfung durchströmen. Besonders bevorzugt ist sowohl in dem ersten als auch in dem zweiten Nebenrohrleitungsabschnitt jeweils ein Drosselventil angeordnet. Beispielsweise ist im Bereich des Volumenänderungskörpers sowohl ein erster Nebenrohrleitungsabschnitt zur Ableitung des Sperrfluids von dem Volumenänderungskörper in Richtung des Volumenspeicherbehälter als auch ein separater zweiter Nebenrohrleitungsabschnitt zur Zuleitung des Sperrfluids von dem Volumenspeicherbehälter in Richtung des Volumenänderungskörpers, sowie ein im Bereich des Volumenspeicherbehälter angeordneter, den ersten und zweiten Nebenrohrleitungsabschnitt verbindender dritter Nebenrohrleitungsabschnitt, insbesondere ein Ein- und Auslass des Volumenspeicherbehälters, der alternierend in Richtung hin zu dem oder weg von dem Volumenspeicherbehälter durchströmbar ist. Dadurch kann beispielsweise bei bestimmten Drucksituationen, wie bei schnell aufeinanderfolgenden Druckstößen, ein teilweises Zurückströmen des Sperrfluids durch den zweiten Nebenrohrleitungsabschnitt in den Volumenänderungskörper bewirkt werden, sodass ein darauffolgender Druckstoß wiederum effektiv abgefangen werden kann.

Vorzugsweise ist in der zumindest einen Nebenrohrleitung zusätzlich ein Rückschlagventil angeordnet. Dadurch kann das Sperrfluid gezielt und vorbestimmbar durch die Nebenrohrabschnitte gelenkt werden. Insbesondere kann ein Rückströmen des Sperrfluids aus oder in bestimmten Bereichen, wie dem Drosselbereich, verhindert werden. Besonders bevorzugt ist in dem ersten Nebenrohrleitungsabschnitt ein Rückschlagventil, welches eine Rückströmen von dem Volumenspeicherbehälter in Richtung des Volumenänderungskörpers verhindert, und in dem zweiten Nebenrohrleitungsabschnitt ein Rückschlagventil, welches ein Rückströmen von dem Volumenänderungskörper in Richtung des Volumenspeicherbehälter das verhindert, angeordnet. Ferner kann dadurch eine Überhitzung des Sperrfluids und/oder eine Überlastung des Nebenrohrleitungssystems sowie des Volumenspeicherbehälters bei einem Auftreten eines relativ großen Druckstoßes verhindert werden.

Vorzugsweise ist der Volumenänderungskörper als eine Trennvorrichtung zum fluidischen Trennen eines in der Hauptrohrleitung befindlichen Fördermediums und eines mit dem Volumenspeicherbehälter fluidisch verbundenen und in einem Sperrdruckraum befindlichen Sperrfluids ausgebildet. Dadurch eignet sich das Dämpfungssystem insbesondere für zu fördernde Fluide, welche Festkörperanteile aufweisen. Der von der Hauptrohrleitung fluidisch getrennte Sperrdruckraum erstreckt sich besonders bevorzugt von einem durch den Volumenänderungskörper ausgebildeten oder begrenzten ersten Sperrdruckbereich durch die zumindest eine Nebenrohrleitung bis in den Volumenspeicherbehälter. Der Sperrdruckraum weist bevorzugt ein verlagerbares, jedoch nicht größen-veränderliches Volumen auf. Dies kann beispielsweise durch Auffüllen des Sperrdruckraums mit einem inkompressiblen Sperrfluid realisiert werden. Dadurch kann eine Druckpulsation in der Hauptrohrleitung unmittelbar an das Sperrfluid übertragen werden, sodass in dem neben Rohrleitungssystemen und dem Volumenspeicherbehälter eine besonders langlebige und effektive Dämpfung erfolgen kann. Insbesondere können negative Einflüsse auf die Dämpfungskomponenten durch das mit Festkörperanteilen versehene Fluid des Fördermediums verhindert werden.

Vorzugsweise umgibt der Volumenänderungskörper zumindest teilweise eine innerhalb der Hauptrohrleitung angeordnete und einen Teil eines das Sperrfluid aufweisenden Sperrdruckraums bildende Kammer, dessen Raumvolumen in Abhängigkeit eines in der Hauptrohrleitung anliegenden Drucks mittels des Volumenänderungskörpers vergrößerbar, verkleinerbar oder verlagerbar ist. Dadurch kann eine in der Hauptrohrleitung auftretende Druckpulsation, insbesondere eine Druckerhöhung und ein Druckabfall, besonders effektiv an das von dem Fördermedium getrennt angeordnete Sperrfluid übertragen werden und folglich eine langlebige Dämpfung einer Pulsation in einem mit Festkörperanteilen versehenen Fluid ermöglicht werden. Beispielsweise kann das Raumvolumen der Kammer verkleinert werden, wenn in der Hauptrohrleitung ein relativ großer Druck und in der Nebenrohrleitung ein dazu relativ geringer Druck anliegt, insbesondere im Falle eines Druckstoßes. Ferner kann das Raumvolumen der Kammer vergrößert werden, wenn in der Hauptrohrleitung ein relativ geringer Druck und in der Nebenrohrleitung ein relativ großer Druck anliegt, insbesondere zeitlich nach einem Abfangen eines Druckstoßes und einer Rückstellung des Volumenänderungskörpers in eine Ausgangsposition. Bei dem Vergrößern oder Verkleinern des Raumvolumens der Kammer kann korrespondierend ein Raumvolumen einer separaten zweiten Kammer verändert werden. Beispielsweise kann das Raumvolumen der Kammer dadurch verlagert werden, in dem das innerhalb des Sperrdruckraums von dem Volumenänderungskörper im Bereich der Hauptrohrleitung ausgebildete Raumvolumen verkleinert oder aufgelöst wird und mittels des Sperrfluids im Bereich des Volumenspeicherbehälter vergrößert wird, oder entsprechend umgekehrt. Dadurch ist ein besonders effektives Dämpfen von relativ großen Druckpulsationen ermöglicht.

Grundsätzlich kann der Volumenänderungskörper als ein zwischen zwei voneinander getrennten Fluiddrucksystemen, insbesondere der Hauptrohrleitung und der Nebenrohrleitung, angeordneter und verschiebbar gelagerter Kolben ausgestaltet sein. Dadurch können auch besonders große Druckstöße in besonders sicherer Weise zur Dämpfung an das Sperrfluid übertragen werden. Bei Auftreten eines Druckstoßes kann der Kolben zur Volumenvergrößerung des Drucksystems und damit zum Abfangen des Druckstoßes beispielsweise in Richtung von der Hauptrohrleitung zu der Nebenrohrleitung verschoben werden.

Vorzugsweise ist der Volumenänderungskörper als ein Verdrängungskörper ausgebildet, dessen Verdrängungsvolumen elastisch veränderbar ist. Dadurch kann das Pulsationsdämpfungssystem auch bei relativ kleinen Hauptrohrleitungen oder an bestehenden Anlagen in besonders einfacher Weise und auch nachträglich angewendet werden. Das Verdrängungsvolumen kann insbesondere ein Teil des Sperrdruckraums sein.

Besonders bevorzugt umfasst der Volumenänderungskörper eine flexible und elastisch verformbare Hülle, wobei die Hülle eine Kammer umgibt, die fluidisch mit der zumindest einen Nebenrohrleitung verbunden ist, und in der Kammer eine Strömungsleiteinrichtung zur Lenkung des innerhalb der Kammer strömenden Sperrfluids angeordnet ist. Neben den bereits zuvor genannten Vorteilen einer verbesserten Anwendbarkeit ist zudem beispielsweise ein vollständiges Durchströmen der Hülle sowie eine dadurch ermöglichte gleichmäßige Vergrößerung oder Verkleinerung des Volumenänderungskörpers erreicht, sodass eine besonders großflächige Übertragung an das Sperrfluid sowie eine besondere schnelle Reaktion auf einen Druckstoß erfolgen kann. Ferner kann das durch die Kammer strömende Sperrfluid, welches beispielsweise in einer Drossel erwärmt wurde, von dem in der Hauptrohrleitung strömenden Fluidmedium in besonders geeigneter Weise gekühlt werden. Beispielsweise kann die Strömungsleiteinrichtung die Kammer zumindest in einem Abschnitt in zwei Kammerteile unterteilen, insbesondere einen Ableitungsteil und einen Zuleitungsteil. Die Hülle dient bevorzugt zur fluidischen Trennung der Hauptrohrleitung und der zumindest einen Nebenrohrleitung und ist bevorzugt in Richtung hin zu oder weg von der Kammer elastisch verformbar.

In einer bevorzugten Ausgestaltung ist der Volumenänderungskörper stromaufwärts und/oder stromabwärts einer Pumpe oder einer Pumpenanordnung angeordnet. Dadurch kann eine besonders effektive, langlebige und kostengünstige Dämpfung von Druckpulsationen in einem Pumpensystem erfolgen. Beispielsweise kann der Volumenänderungskörper stromaufwärts einer Pumpe in einem Ansaugtrakt, insbesondere in einer Hauptrohrleitung, angeordnet sein, welche als Verteilerrohr ausgebildet ist und mehrere Hauptrohrleitungszugänge zu jeweils einer Pumpe, insbesondere Kolbenpumpe, aufweist. Alternativ oder zusätzlich kann der Volumenänderungskörper stromabwärts einer Pumpe, insbesondere in einem Auslass der Pumpe, angeordnet sein.

Vorzugsweise ist in dem Volumenspeicherbehälter neben dem Sperrfluid zusätzlich ein Gasvolumen ausgebildet. Dadurch kann ein auf das Sperrfluid übertragener Druckstoß in besonders vorteilhafter Weise gedämpft werden. Insbesondere kann bei Druckstößen und einer hieraus resultierenden Druckdifferenz zwischen dem Sperrfluid und dem Gasvolumen eine Verlagerung der Füllstandshöhe des Sperrfluids unter gleichzeitiger Komprimierung des Gasvolumens in dem Volumenspeicherbehälter erfolgen, sodass der Druckstoß durch die Komprimierung des Gasvolumens "abgefedert" werden kann. Ferner kann mittels des Gasdrucks sowohl das Volumen als auch der in der zumindest einen Nebenrohrleitung herrschende Druck des Sperrfluids eingestellt werden. Der somit als Hydrospeicher wirkende Volumenspeicherbehälter kann eine beliebige Form aufweisen, besonders bevorzugt ist der Volumenspeicherbehälter als ein senkrecht stehendes Rohrstück ausgebildet. Grundsätzlich kann zur fluidischen Trennung des Sperrfluids und des Gasvolumens der Volumenspeicherbehälter eine flexible und elastisch verformbare Membran aufweisen; dies ist jedoch nicht zwingend erforderlich.

In einer bevorzugten Ausgestaltung der Erfindung ist die Hauptrohrleitung stromaufwärts des Volumenänderungskörpers mit einem Windkessel fluidisch verbunden, wobei in dem Windkessel, bevorzugt in einem unteren Bereich des Windkessel, dem sogenannten Fördermediumbereich, das Fördermedium und, bevorzugt in einem oberen Bereich des Windkessels, ein Gasvolumen ausgebildet sind. Dadurch können Druckschwankungen zusätzlich über den Windkessel ausgeglichen werden, sodass eine besonders effektive Dämpfung von Druckschwankungen ermöglicht ist. Der Windkessel kann beispielsweise als ein druckfester Tank ausgebildet sein, vorteilhafterweise mit mehreren hundert Litern Fassungsvermögen. Der Fördermediumbereich des Windkessels dient bevorzugt als Zwischenspeicher für das zu fördernde Fördermedium. In dem übrigen Bereich des Windkessels befindet sich bevorzugt das unter Überdruck befindliche Gasvolumen, wobei das Gas vorteilhafterweise Luft ist. Besonders bevorzugt ist der Windkessel stromabwärts einer Speisepumpe angeordnet.

Vorzugsweise ist der Windkessel über eine Verbindungsleitung mit dem Volumenspeicherbehälter verbunden. Insbesondere kann das in dem Windkessel ausgebildete Gasvolumen mit dem in dem Volumenspeicherbehälter ausgebildeten Gasvolumen fluidisch verbunden sein. Dadurch kann ein in dem System globaler Druckausgleich stattfinden. Selbstverständlich können weitere Windkessel und/oder Volumenspeicherbehälter, insbesondere auf der Seite des Gasvolumens miteinander verbunden sein. Dadurch kann die Regelung des Dämpfungssystems einfacher gestaltet sein und auf zusätzliche Ventile, insbesondere Druckventile, verzichtet werden. Es bleibt zu erwähnen, dass diese Anordnung auch analog auf der Hochdruckseite der Pumpe angeordnet werden kann. Insgesamt ist das System dadurch besonders effizient und kostengünstig ausgestaltet.

Besonders bevorzugt ist zum Steuern oder Regeln des Gasvolumens ein Druckregelventil vorgesehen, welches beispielsweise mit einer Druckquelle verbunden sein kann. Dadurch kann das Dämpfungssystem in besonders einfacher Weise auf einen jeweils in der Hauptrohrleitung anliegenden Druck, insbesondere einem mittleren bzw. durchschnittlichen Förderdruck, abgestimmt werden. Beispielsweise kann hierdurch die Füllstandshöhe des in dem Windkessel befindlichen Fördermediums und/oder die Füllstandshöhe des in dem Volumenspeicherbehälter befindlichen Sperrfluids eingestellt werden.

Dem Sperrfluid wird insbesondere beim Durchströmen der Drossel regelmäßig Wärmeenergie zugeführt. Zur Vermeidung einer Überhitzung des Sperrfluids erfolgt gewöhnlich eine Wärmeabgabe über die Außenwände des Volumenspeicherbehälters. In einigen Anwendungsfällen kann jedoch eine reguläre Kühlung des Sperrfluids über eine Wärmeabgabe an der Außenwandung des Volumenspeicherbehälters nicht ausreichend sein, sodass eine zusätzliche Kühlung des Sperrfluids erforderlich ist. Daher weist der Volumenspeicherbehälter in einer vorteilhaften Ausgestaltung der Erfindung einen Wärmetauscher auf. Der Wärmetauscher dient zum Temperieren, insbesondere zum Kühlen, des Sperrfluids. Dadurch kann das bei Druckstößen, insbesondere im Bereich der Drosseln, erwärmte Sperrfluid in besonders geeigneter Weise - insbesondere effektiv und in platzsparender Weise - gekühlt werden. Dazu ist der Wärmetauscher bevorzugt in einem unteren Bereich des Volumenspeicherbehälters angeordnet, insbesondere in dem Bereich, in dem das Sperrfluid sich befindet. Der Wärmetauscher kann beispielsweise als ein Luft-Wärmetauscher mit nach außen hervorstehenden Kühlrippen ausgebildet sein.

Besonders bevorzugt ist der Wärmetauscher von einem Kühlmedium durchströmbar und weist hierzu eine Zuleitung bzw. einen Einlass und eine Ableitung bzw. einen Auslass auf. Dadurch kann das Sperrfluid besonders effektiv und unabhängig von dem Fördermedium und/oder einer Umgebungstemperatur gekühlt werden. Das den Wärmetauscher durchströmende Kühlmedium ist insbesondere von dem Sperrfluid, dem Gasvolumen und dem zu fördernden Fördermedium fluidisch getrennt. Das Sperrfluid kann somit bedarfsweise über den Wärmetauscher aktiv gekühlt werden. Das Kühlmedium kann beispielsweise Wasser oder Öl sein. Insgesamt ist das Dämpfungssystem dadurch insbesondere auch für ein Fördermedium, welches eine relativ hohe Temperatur aufweist, sowie zur Anwendung bei relativ hohen Umgebungstemperaturen geeignet. Ferner ist ermöglicht, dass das in dem Sperrdruckraum befindliche Sperrfluid nicht zwingend in einem Kreislauf strömen muss, sodass die Anzahl der Nebenrohrleitungen, der Rückschlagventile und/oder der Strömungsleiteinrichtungen reduziert werden können, sodass das System insgesamt besonders kostengünstig ist.

In einer Ausgestaltung der Erfindung sind ein erster Windkessel über eine erste Verbindungsleitung mit zumindest einem ersten Volumenspeicherbehälter, und ein zweiter Windkessel über eine separate zweite Verbindungsleitung mit zumindest einem zweiten Volumenspeicherbehälter verbunden. Der erste Windkessel und der erste Volumenspeicherbehälter sind dabei bevorzugt pumpeneinlassseitig angeordnet, insbesondere kann die einlassseitige Hauptrohrleitung stromaufwärts des Volumenänderungskörpers mit dem Windkessel fluidisch verbunden sein, wobei in dem Windkessel das Fördermedium und ein Gasvolumen ausgebildet sind. Der zweite Windkessel und der zweite Volumenspeicherbehälter sind bevorzugt pumpenauslassseitig angeordnet, insbesondere kann das auslassseitige Sammelrohr stromabwärts des Volumenänderungskörpers mit dem Windkessel fluidisch verbunden sein, wobei in dem Windkessel das Fördermedium und ein Gasvolumen ausgebildet sind. Dadurch kann eine effektive Pulsationsdämpfung sowohl einlassseitig als auch auslassseitig der Pumpen erfolgen.

Nachfolgend werden sechs Ausführungsbeispiele der Erfindung anhand der Figuren näher erläutert. Es zeigen schematisch:
- Figur 1: - einen schematischen Aufbau einer ersten Ausgestaltung eines erfindungsgemäßen Pulsationsdämpfungssystems im Ansaugtrakt einer 3Kolbenpumpe;
- Figur 2: - eine Kombination von zwei unabhängigen Pulsationsdämpfungssystemen auf der Saug- und Druckseite einer Kolbenpumpe;
- Figur 3: - einen schematischen Aufbau einer dritten Ausgestaltung eines erfindungsgemäßen Pulsationsdämpfungssystems;
- Figur 4: - einen schematischen Aufbau einer vierten Ausgestaltung eines erfindungsgemäßen Pulsationsdämpfungssystems;
- Figur 5: - eine Ausführungsform mit Pulsationsdämpfungssystemen auf der Saug- und Druckseite einer Triplex-Kolbenpumpe;
- Figur 6: - eine weitere Ausführungsform mit Pulsationsdämpfungssystemen auf der Saug- und Druckseite einer Duplex-Kolbenpumpe; und
- Figur 7: - eine Detailansicht eines Pulsationsdämpfungssystems.

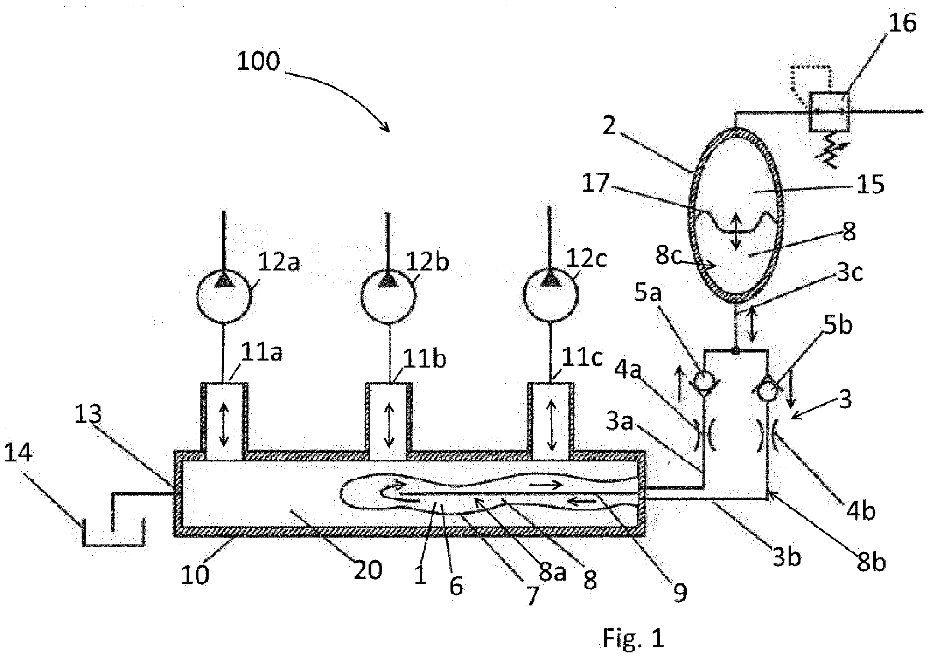

In der Figur 1 ist ein schematischer Aufbau eines Pulsationsdämpfungssystems 100 zur Dämpfung von Druckschwingungen in einem Ansaugtrakt 10 einer Pumpe 12a, 12b, 12c gezeigt. Die Pumpe umfasst vorliegend drei Einzelpumpen 12a, 12b, 12c bzw. eine 3-Kolbenpumpe mit drei einzelnen, ein Fluidmedium 20 fördernden Pumpenkolben, welche mit den Bezugszeichen 12a, 12b, 12c gekennzeichnet sind. Jede Einzelpumpe bzw. jeder Pumpenkolben 12a, 12b, 12c weist eine von einer Hauptrohrleitung 10, vorliegend insbesondere einem Verteilerrohr, ausgehende Ableitung 11a, 11b, 11c auf, durch die das beispielsweise mit Feststoffpartikeln oder Festkörperanteilen versehene Förder- oder Fluidmedium 20 angesaugt werden kann, insbesondere aus einem Speicher 14 über einen Sauganschluss 13 und das Verteilerrohr 10.

Wenn die Einzelpumpen 12a, 12b, 12c jeweils einen intermittierenden Volumenstrom aus dem Verteilerrohr 10 ansaugen, wie dies üblicherweise bei Kolbenpumpen der Fall ist, kann es zumindest in den Ansaugleitungen 11a, 11b, 11c, in dem Verteilerrohr 10 und in der Saugleitung 13 zu ungleichförmigen Volumenströmen und den damit einhergehenden Druckpulsationen kommen. Um diese Druckpulsation zu dämpfen, ist das Pulsationsdämpfungssystem 100 vorgesehen, welches insbesondere einen Volumenänderungskörper 1, ein Nebenrohrleitungssystem 3 sowie einen Volumenspeicherbehälter 2 umfasst. Das im Folgenden auch mit 101, 102, 103 oder 104 gekennzeichnete Pulsationsdämpfungssystem ist jeweils wie das zuvor beschriebene System 100 aufgebaut, und umfasst insbesondere jeweils einen Volumenänderungskörper 1, ein Nebenrohrleitungssystem 3 sowie einen Volumenspeicherbehälter 2 bzw. 25, 25a, 25b, 25c, 25d.

Der Volumenänderungskörper 1 ist in Figur 1 in dem Verteilerrohr 10 angeordnet und im Wesentlichen durch eine biegeweiche elastische Hülle oder Membran 7 gebildet. Insbesondere wird von der Membran 7 ein Membranraum oder eine Kammer 8a aufgespannt bzw. umgeben, sowie eine Trennung des zu pumpenden Fördermediums 20 von einem weiteren, innerhalb der geschlossenen Membran 7 angeordneten Fluid 6, insbesondere einem Sperrfluid, bewirkt. Durch die elastische Ausgestaltung der Membran 7 ist der Volumenänderungskörper 1 insbesondere derart ausgebildet, dass das von der Membran 7 umgebende Volumen betragsmäßig verändert werden kann, das heißt dass der Volumenänderungskörper 1 - je nach an der Membran 7 herrschender Druckdifferenz - alternierend verkleinert und vergrößert werden kann. Die Membran 7 ist insbesondere derart elastisch ausgestaltet, dass eine Druckerhöhung im Fördermedium 20 nahezu verlustfrei auf das Sperrfluid 6 übertragen werden kann. Dazu ist das Sperrfluid 6 bevorzugt eine nahezu inkompressible Flüssigkeit, idealerweise wird als Sperrfluid 6 ein hydraulisches Öl verwendet.

Das in der Kammer 8a befindliche Sperrfluid 6 im Innenraum der Membran 7 ist über eine Nebenrohrleitung 3 mit einem als Hydrospeicher wirkenden Volumenspeicherbehälter 2 verbunden. Im Folgenden wird der Volumenspeicherbehälter 2 auch mit 25, 25a, 25b, 25c, 25d gekennzeichnet, wobei diese Behälter im Wesentlichen gleich aufgebaut sind. Sämtliche Bereiche, in denen das Sperrfluid 6 strömbar ist, werden vorliegend als Sperrdruckraum 8 bezeichnet, wobei der Sperrdruckraum 8 insbesondere den Bereich der Kammer 8a, einen in den Nebenrohrleitungen 3, 3a, 3b, 3c ausgebildeten Sperrdruckraumbereich 8b und einen in dem Volumenspeicherbehälter 2 ausgebildeten Sperrdruckraumbereich 8c umfasst. Aufgrund der Inkompressibilität des Sperrfluids 6 ist das Volumen des Sperrdruckraums 8 betragsmäßig im Wesentlichen nicht veränderbar.

Bei dem Volumenspeicherbehälter 2 handelt es sich um eine im oberen Bereich mit komprimiertem Gas 15 gefüllte Kavität mit starrer Gehäusewandung. Im unteren Bereich befindet sich ein Anschlussbereich 3c, über den das Sperrfluid 6 aus dem Membranraum 7 in den Volumenspeicherbehälter 2 gelangen kann oder alternativ aus diesem wieder in den Speicher zurückfließen kann. Eine in dem Volumenspeicherbehälter 2 optional angeordnete elastische Membran 17 bewirkt eine fluidischen Trennung des mit dem Sperrfluid 6 gefüllten Sperrdruckraums 8 von dem Gasvolumen 15. Es sollte jedoch deutlich sein, dass die Membran 17 zur Trennung des Sperrfluids 6 von dem Gasvolumen 15 nicht zwingend erforderlich ist; so kann die mit dem Bezugszeichen 17 gekennzeichnete Linie auch als Füllstandshöhe des Sperrfluids 6 in dem Volumenspeicherbehälter 2 angesehen werden. Über ein Druckregelventil 16 kann der Gasdruck bzw. das Gasvolumen 15 im Volumenspeicherbehälter 2 variiert werden. Insbesondere wird der im Volumenspeicherbehälter 2 anliegende Gasdruck über das Druckregelventil 16 auf den mittleren Druck des im Verteilerrohr 10 herrschenden Drucks eingestellt.

Die Nebenrohrleitung 3 weist für ein besonders geeignetes Strömungsverhältnis des Sperrfluids 6 mehrere einzelne Nebenrohrleitungen oder Nebenrohrleitungsabschnitte 3a, 3b, 3c auf. Dadurch ist die von der Membran 7 umgebende Kammer 8a sowohl über eine als Ableitung wirkende Nebenrohrleitung 3a als auch über eine hierzu parallel angeordnete und als Zuleitung wirkende Nebenrohrleitung 3b mit dem Volumenspeicherbehälter 2 fluidisch verbunden.

In beiden Nebenrohrleitungen 3a und 3b befindet sich jeweils ein Drosselventil 4a bzw. 4b, welche beim Durchströmen des Sperrfluid 6 einen Strömungswiderstand darstellen und einen Teil der Strömungsenergie in Wärme umwandeln, und dadurch ein auf das Sperrfluid 6 übertragener Druckstoß gedämpft wird. Neben den Drosseln 4a, 4b ist in den Nebenrohrleitungen 3a und 3b zusätzlich jeweils ein Rückschlagventil 5a, 5b vorgesehen. Die Sperrrichtung der Rückschlagventile 5a, 5b ist derart ausgewählt, dass ein freier Durchfluss von der Kammer 8a zum Volumenspeicherbehälter 2 nur über die Leitung 3a erfolgen kann. Ein Rückfluss vom Volumenspeicherbehälter 2 in den Membranraum 8a kann jedoch nur über die Leitung 3b stattfinden. Dadurch können insbesondere bei rasch aufeinanderfolgenden Druckstößen eine definierte Strömungsrichtung des Sperrfluids 6 geschaffen und somit mögliche, aufgrund einer Erwärmung des Sperrfluids 6 in der Drossel 4a, 4b generierbare Überhitzung des Sperrfluids 6 vermieden werden. Der Anschluss des Volumenspeicherbehälters 2 umfasst einen sowohl als Zu- als auch als Ableitung genutzten Nebenrohrleitungsabschnitt 3c.

Um auch in der von der Membran 7 umgebenden Kammer 8a eine bevorzugte Strömungsrichtung des Sperrfluids 6 zu erzeugen, kann innerhalb der Kammer 8a eine Strömungsleiteinrichtung vorgesehen sein. Vorliegend ist die Strömungsleiteinrichtung 9 insbesondere zwischen den Anschlüssen des als Ableitung des Sperrfluids 6 von der Kammer 8a in den Volumenspeicherbehälter 2 genutzten Nebenrohrleitungsabschnitt 3a und des als Zuleitung des Sperrfluids 6 von dem Volumenspeicherbehälter 2 in die Kammer 8a genutzten Nebenrohrleitungsabschnitt 3b angeordnet. Dadurch kann insbesondere ein direktes Überströmen des Sperrfluid 6 von der Zuleitung 3b in die Ableitung 3a verhindert werden. Dies ist insbesondere dann vorteilhaft, wenn sich das Sperrfluid 6 beispielsweise beim Durchströmen der Drosseln 4a, 4b erwärmt hat und in der Kammer 8a mittels einer Durchmischung sowie mittels einer Wärmeübertragung an das an der Membran 7 anliegende Fördermediums 20 wieder abgekühlt werden kann.

Bei einem Auftreten einer Druckpulsation und einer damit verbundenen Druckerhöhung im Verteilerrohr 10, kommt es aufgrund der elastisch ausgebildeten Membran 7 und einer daraus resultierenden Volumenverkleinerung der Kammer 8a auch in dem Sperrfluid 6 zu einer entsprechenden Druckerhöhung. Aufgrund der in den Nebenrohrleitungen 3 angeordneten Rückschlagventile 5a, 5b wird ein Volumenstrom des Sperrfluids 6 in Richtung aus der Kammer 8a in die Ableitung 3a, durch das Drosselventil 4a und das Rückschlagventil 5a erzeugt. Dabei wird in der Drossel 4a ein Teil der Strömungsenergie des Sperrfluids 6 in Wärme umgewandelt. In Abhängigkeit der Frequenz und Intensität der im Verteilerrohr 10 aufgetretenen und an das Sperrfluid 6 übertragenen Druckpulsation kann das aus der Drossel 4a strömende Sperrfluids 6 zu einem Großteil über die Nebenrohrleitung 3c in den Volumenspeicherbehälter 2 geleitet werden. Dabei kann entsprechend einer Druckdifferenz an der Membran 17 das Gasvolumen 15 komprimiert und der Sperrdruckraumbereich 8c vergrößert werden. Darüber hinaus ist es möglich, dass zusätzlich ein vergleichsweise geringer Anteil des aus der Drossel 4a strömenden Sperrfluids 6 über die Zuleitung 3b, das Rückschlagventil 5b sowie die Drossel 4b wieder zurück in die Kammer 8a geleitet wird. Dabei wird auch in der Drossel 4b ein Teil der Strömungsenergie des Sperrfluids 6 in Wärme umgewandelt. Die jeweiligen Strömungsrichtungen oder Verlagerungsmöglichkeiten der Membran bzw. der Füllstandshöhe sind in den Figuren jeweils mit einem Pfeil gekennzeichnet.

Sinkt anschließend der Druck im Verteilerrohr 10 nun unter den im Gasvolumen 15 in dem Volumenspeicherbehälter 2 eingestellten Druck, so kommt es an der Membran 7 zu einer zum oben beschriebenen Fall umgekehrten Druckdifferenz, sodass ein Volumenstrom des Sperrfluids 6 von dem Volumenspeicherbehälter 2 über die Zuleitung 3b in den Innenraum der Kammer 8a erzeugt wird. Hierbei werden wiederum das Rückschlagventil 5b und die Drossel 4b durchströmt, wobei es beim Durchströmen von Drossel 4b wiederum zu einer Umwandlung von Strömungsenergie in Wärme kommt. Die beiden in der Nebenrohrleitung 3 angeordneten Drosselstellen 4a und 4b bewirken somit eine Umwandlung der Pulsationsenergie in Wärme, was zu einem raschen Abklingen der Druckamplituden in der Hauptrohrleitung 10 führt.

Da sich bei der Umwandlung der Pulsationsenergie in Wärme das zwischen der Kammer 8a und dem Volumenspeicherbehälter 2 hin und her fließende Sperrfluid 6 ständig erwärmt, muss verhindert werden, dass der aus der Zuleitung 3b in die Kammer 8a einfließende Volumenstrom direkt wieder in die Ableitung 3a eingesaugt wird. Denn ein solcher Kurzschluss-Volumenstrom könnte zu einer unzulässigen Erwärmung des Sperrfluids 6 in den Nebenrohrleitungen 3 führen, wenn eine andauernde Pulsationsanregung gegeben ist. Daher ist vorliegend die Strömungsleiteinrichtung 9 vorgesehen, die ein direktes Ansaugen des Volumenstroms aus der Zuleitung 3a in die Ableitung 3b verhindert und somit eine möglichst große Durchmischung des aus der Zuleitung 3b in die Kammer 8a einströmenden Sperrfluids 6 mit dem Restvolumen ermöglicht. Diese Durchmischung sowie das an der Membran 7 gegenüberliegend befindliche, beispielsweise relativ kalte Fördermedium 20, können somit eine zu starke Erwärmung des Sperrfluids 6 verhindern.

Selbstverständlich kann das in der Figur 1 gezeigte, auf der Einlassseite einer Pumpe angeordnete Pulsationsdämpfungssystem 100 auch auf der Auslassseite einer Pumpe angeordnet sein. Hierdurch können auch die an der Auslassseite einer Pumpe entstehende Druckpulsation in der oben beschriebenen Art und Weise kompensiert werden. Dazu wird insbesondere der im Gasvolumen 15 des Volumenspeicherbehälters 2 an den mittleren Druck in einem Auslass-Verteilerrohr angepasst.

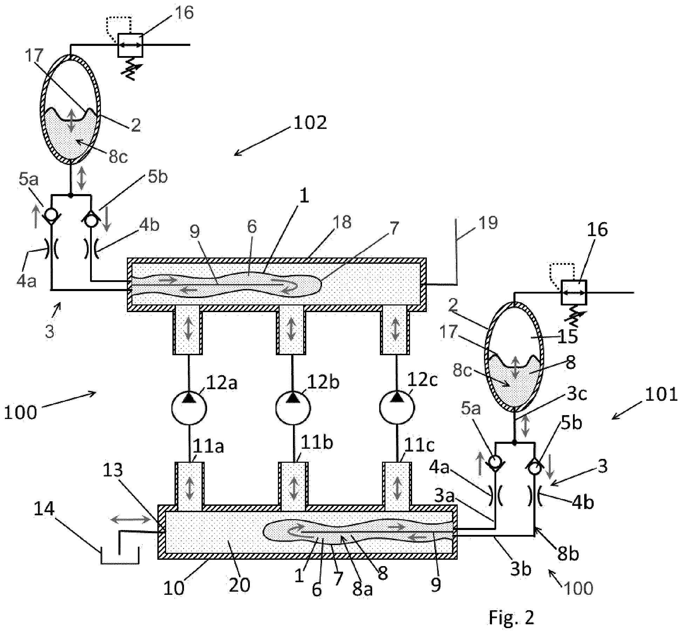

In der Figur 2 ist eine Anordnung von zwei voneinander unabhängigen Pulsationsdämpfungssystemen 100 auf der Saug- und Druckseite einer Kolbenpumpe 12a, 12b, 12c gezeigt. Ein erstes Pulsationsdämpfungssystem 101 ist wiederum an dem pumpeneinlassseitig angeordneten Verteilerrohr 10 angeordnet, ein zweites Pulsationsdämpfungssystem 102 ist an dem pumpenauslassseitig angeordneten Sammelrohr 18 angeordnet, welches im Wesentlichen dem Verteilerrohr 10 entspricht und einen fortführende Leitung 19 aufweist. Die Ausgestaltung und Funktionsweise der Pulsationsdämpfungssysteme 101, 102 entspricht dabei jeweils den oben zu Figur 1 erläuterten Merkmalen des Pulsationsdämpfungssystems 100.

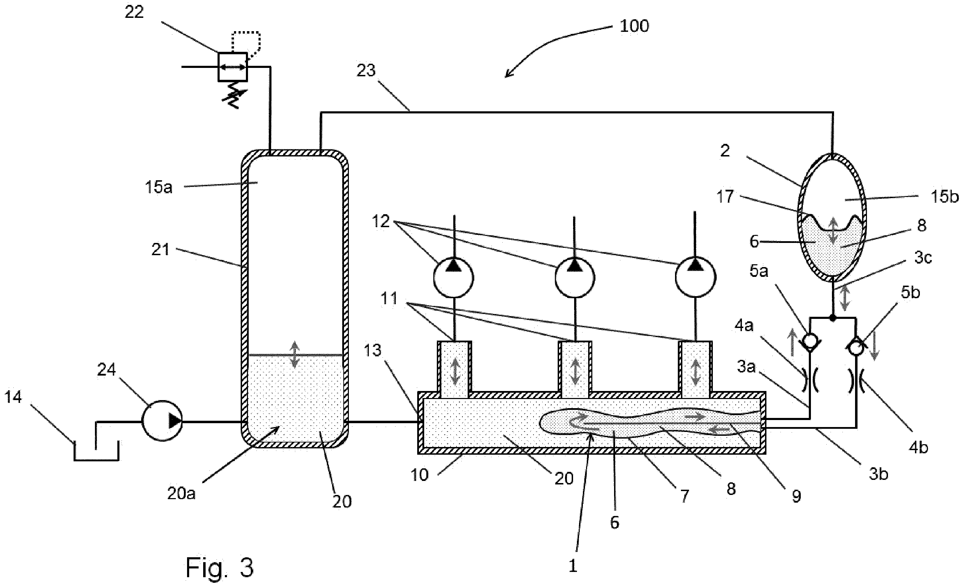

In der Figur 3 ist eine Ausgestaltung des Dämpfungssystems gezeigt, bei dem der Saugdruck im Hauptverteilerrohr bzw. Saugverteiler 10 durch eine vorgelagerte Speisepumpe 24 aufgebracht wird. Zur Entkopplung dieser Speise-Einheit, umfassend den Tank 14 und die Speisepumpe 24, von den Pulsationen der Hauptpumpenanordnung 12 wird ein sogenannter Windkessel 21 eingesetzt. Dabei handelt es sich um einen großen druckfesten Tank mit typischerweise mehreren hundert Litern Fassungsvermögen.

Der Windkessel 21 ist im unteren Bereich 20a als Zwischenspeicher mit dem zu förderndem Fördermedium 20 gefüllt. Im oberen Bereich befindet sich ein unter Überdruck befindliches Gasvolumen 15a, wobei das Gas üblicherweise Luft ist. Die mittlere Füllstandshöhe des zu pumpenden Fördermediums im Windkessel 21 wird mittels einer Regelung des Gasdrucks 15a über das Druckregelventil 22 nahezu konstant gehalten. Simulationen haben gezeigt, dass es ausreichend für die Funktion des Dämpfers ist, den Gasdruck 15a über eine Verbindungsleitung 23 auf die Gasseite des Hydrospeichers 2 zu geben. Dadurch kann das Dämpfungssystem 100 einfacher gestaltet werden und auf ein weiteres Druckregelventil verzichtet werden. Es bleibt zu erwähnen, dass diese Anordnung auch analog auf der Hochdruckseite der Pumpe angeordnet werden kann, da Pumpen auch auf der Auslassseite der Pumpe mit einem Windkessel versehen sein können, wie es in Bezug auf den Volumenspeicherbehälter 2 bzw. 25 in Figuren 2, 5 und 7 dargestellt ist.

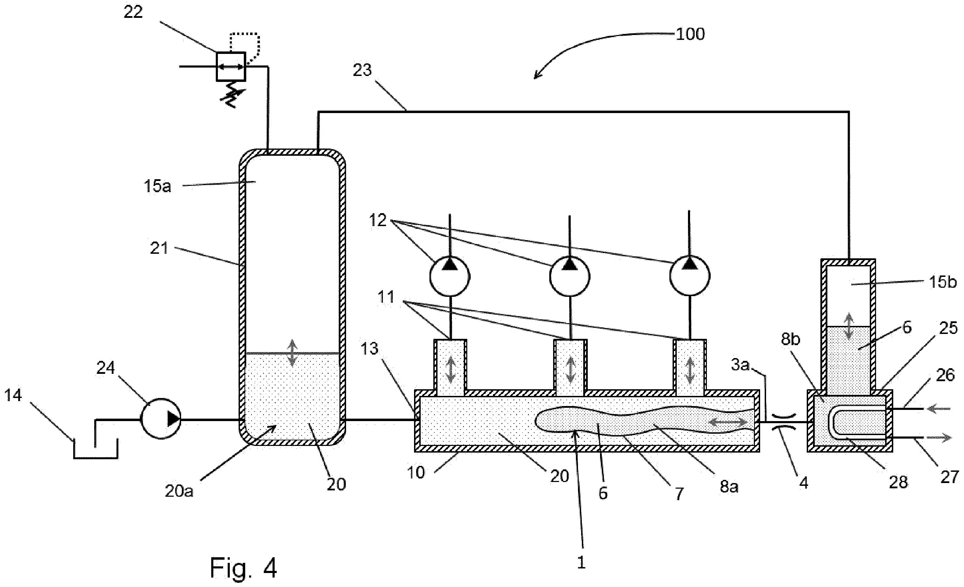

In der Figur 4 ist eine weitere Ausgestaltung des Dämpfungssystems 100 gezeigt, wobei zusätzlich eine aktive Kühlung des Sperrfluids 6 vorgesehen ist. Hierbei kann - wie in Figur 4 gezeigt - in dem Volumenspeicherbehälter 25 ein Wärmetauscher 28 angeordnet sein. Der Wärmetauscher 28 ist von einem Kühlmedium, zum Beispiel Wasser oder Öl, durchströmbar. Hierzu kann das Kühlmedium unabhängig von dem Fördermedium an einem Einlass 26 in den Wärmetauscher 28 einströmen und an einem Auslass 27 aus dem Wärmetauscher 28 ausströmen. Dadurch kann die beim Durchströmen der Drossel 4 von dem Sperrfluid 6 aufgenommene Wärme über den Wärmetauscher 28 wieder abgeführt werden, so dass die Temperatur des Sperrfluids 6 im Wesentlichen konstant gehalten werden kann. Dies ist insbesondere dann vorteilhaft, wenn eine Wärmeabgabe von dem Sperrfluid 6 auf das Fördermedium 20 oder an eine Umgebung technisch nicht möglich ist, beispielsweise bei einem stark erwärmten Fördermedium 20 oder einer relativ hohen Umgebungstemperatur. Folglich ist durch diese Ausgestaltung eine verbesserte Anwendbarkeit des Systems ermöglicht. Ferner ist ermöglicht, dass das in dem Sperrdruckraum 8, 8a, 8b, 8c befindliche Sperrfluid 6 zur Kühlung nicht zwingend in einem Kreislauf strömen muss, sodass die Anzahl der Nebenrohrleitungen, der Rückschlagventile und/oder der Strömungsleiteinrichtungen reduziert werden können, sodass das System 100 insgesamt besonders kostengünstig ist. So ist in dem in Figur 4 gezeigten Beispiel lediglich eine einzige Nebenrohrleitung 3c mit einem darin angeordneten Drosselventil 4 erforderlich. Es hat sich aber gezeigt, dass die in Figur 4 gezeigte Anordnung des Pulsationsdämpfungssystems 100 auch ohne den im Volumenspeicherbehälter 25 angeordneten Wärmetauscher 28, das heißt ohne zusätzliche Kühlung des Sperrfluids 6, effektiv betrieben werden kann.

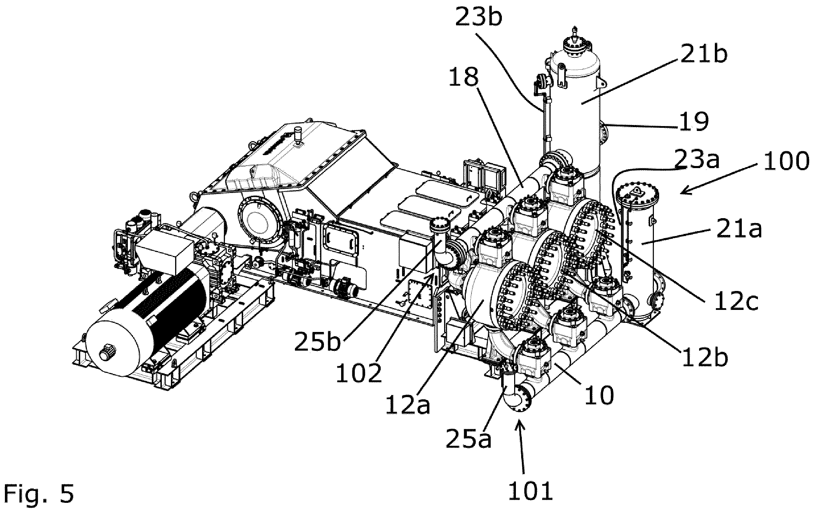

In der Figur 5 ist ein Ausführungsbespiel eines Pulsationsdämpfungssystems 100 an einer sogenannten Triplex-Kolbenpumpe gezeigt. Eine solche Pumpe weist insgesamt drei Einzelpumpen 12a, 12b, 12c auf, welche saugseitig an ein gemeinsames Verteilerrohr 10 angeschlossen sind. Das Pulsationsdämpfungssystem 100 umfasst vorliegend eine Kombination von zwei Pulsationsdämpfungssystemen 101, 102, nämlich ein erstes System 101 auf der Saugseite und ein zweites System 102 auf der Druckseite der Pumpen 12a, 12b, 12c. Jedes Pulsationsdämpfungssystem 101, 102 umfasst wiederum insbesondere einen Volumenänderungskörper 1, ein Nebenrohrleitungssystem 3 sowie einen Volumenspeicherbehälter 25a bzw. 25b.

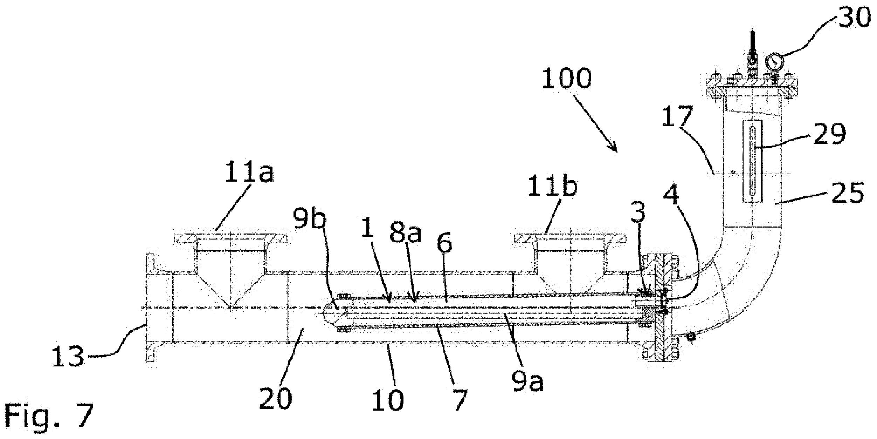

Das Verteilerrohr bzw. die Hauptrohrleitung 10 ist auf Seiten einer nicht dargestellten Speisepumpe 24 mit einem einlassseitigen ersten Windkessel 21a verbunden. Der erste Windkessel 21a ist dabei wie der in Figur 4 schematisch gezeigte Windkessel 21 aufgebaut. An einem dem ersten Windkessel 21a gegenüberliegenden axialen Ende des Verteilerrohrs 10 ist das einlassseitige erste Pulsationsdämpfungssystem 101 mit einem ersten Volumenspeicherbehälter 25a angeordnet. Das erste Pulsationsdämpfungssystem 101, insbesondere der erste Volumenspeicherbehälter 25a, ist im Wesentlichen wie das in Figur 4 schematisch und in Figur 7 im Detail gezeigte System 100 aufgebaut. Vorliegend weist der erste Volumenspeicherbehälter 25a jedoch keinen zusätzlichen Wärmetauscher zum Kühlen des Sperrfluids 6 auf. In dem vorliegend nicht gezeigten Nebenrohrleitungssystem 3 zwischen dem vorliegend nicht gezeigten Volumenänderungskörper 1 und dem ersten Volumenspeicherbehälter 25a ist eine Drossel 4 angeordnet.

Zwischen dem ersten Windkessel 21a, insbesondere einem in dem ersten Windkessel 21a oben angeordneten Gasvolumen 15a, und dem ersten Volumenspeicherbehälter 25a, insbesondere einem darin in einem oberen Bereich angeordneten Gasvolumen 15b, ist eine erste Verbindungsleitung 23a für eine fluidische Verbindung angeordnet. Dadurch kann auf eine separate Druckregelung des Sperrfluids 6, sowie ein entsprechendes Druckregelventil und eine Druckquelle verzichtet werden.

Hochdruckseitig, das heißt am Auslass der Einzelpumpen 12a, 12b, 12c, ist ein Sammelrohr 18 angeordnet, welches - ähnlich wie die einlassseitige Hauptrohrleitung 10 - an einem ersten axialen Ende mit einem auslassseitig angeordneten zweiten Windkessel 21b verbunden ist. Der zweite Windkessel 21b ist im Wesentlichen wie der erste Windkessel 21a aufgebaut. An den zweiten Windkessel 21b schließt sich die Rohrleitung 19 zum Weitertransport des Fördermediums 20 an.

An dem zweiten axialen Ende des Sammelrohrs 18 ist das zweite Pulsationsdämpfungssystem 102 angeordnet. Das zweite Pulsationsdämpfungssystem 102 ist im Wesentlichen wie das erste Pulsationsdämpfungssystem 101 aufgebaut und umfasst insbesondere einen in dem Sammelrohr 18 angeordneten, zur besseren Übersicht vorliegend nicht gezeigten Volumenänderungskörper 1 sowie einen zweiten Volumenspeicherbehälter 25b. In dem vorliegend ebenfalls nicht gezeigten Nebenrohrleitungssystem 3 zwischen dem Volumenänderungskörper 1 und dem zweiten Volumenspeicherbehälter 25a ist eine Drossel 4 angeordnet. Dadurch können auch auslassseitig auftretende Pulsationen effektiv gedämpft werden.

Zwischen dem zweiten Windkessel 21b, insbesondere einem in dem zweiten Windkessel 21b oben angeordneten Gasvolumen 15a, und dem zweiten Volumenspeicherbehälter 25b, insbesondere einem darin in einem oberen Bereich angeordneten Gasvolumen 15b, ist eine zweite Verbindungsleitung 23b für eine fluidische Verbindung angeordnet. Dadurch kann auch hier auf eine separate Druckregelung, sowie ein entsprechendes Druckregelventil und eine Druckquelle verzichtet werden.

Die Funktionsweise des ersten Pulsationsdämpfungssystems 101 und des zweiten Pulsationsdämpfungssystems 102, insbesondere der Volumenspeicherbehälter 25a, 25b, gleicht der weiter oben insbesondere mit Bezug auf die in Figur 2 bzw. 4 beschriebenen Funktionsweise, wobei vorliegend zwischen dem Volumenspeicherbehälter 25a, 25b und dem jeweiligen Windkessel 21a, 21b jeweils eine Verbindungsleitung 23a, 23b zum Druckausgleich vorgesehen ist.

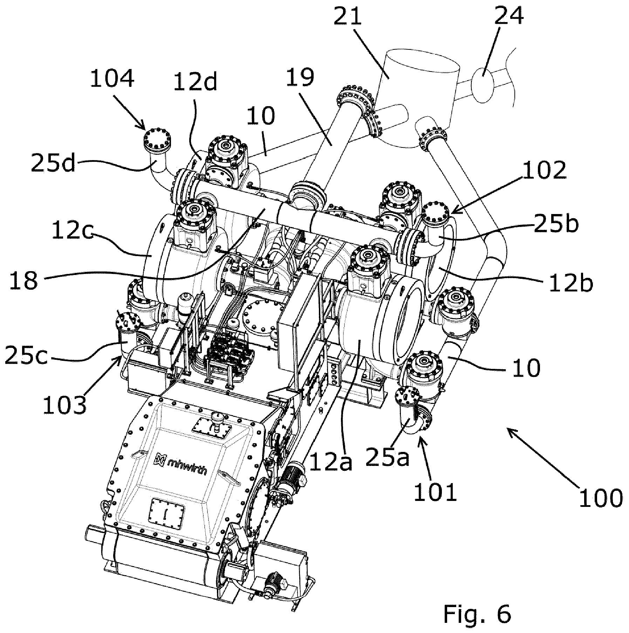

In der Figur 6 ist ein weiteres Ausführungsbespiel eines Pulsationsdämpfungssystems 100 gezeigt, umfassend eine Kombination von vier Einzel-Pulsationsdämpfungssystemen, wobei jeweils zwei Systeme 101, 103 auf der Saugseite und zwei Systeme 102, 104 auf der Druckseite einer Duplex-Kolbenpumpe angeordnet sind.

Jedes Pulsationsdämpfungssystem 101, 102, 103, 104 umfasst wiederum jeweils einen vorliegend nicht gezeigten Volumenänderungskörper 1, ein vorliegend nicht gezeigtes Nebenrohrleitungssystem 3 sowie einen Volumenspeicherbehälter 25a, 25b, 25c bzw. 25d. Die Systeme 101, 102, 103, 104, insbesondere die Volumenspeicherbehälter 25a, 25b, 25c und 25d, sind jeweils im Wesentlichen wie das in Figur 4 schematisch und in Figur 7 im Detail gezeigte System 100 aufgebaut, wobei die Volumenspeicherbehälter 25a, 25b, 25c, 25d vorliegend keinen zusätzlichen Wärmetauscher zum Kühlen des Sperrfluids 6 aufweisen. In dem Nebenrohrleitungssystem 3 zwischen dem Volumenänderungskörper 1 und dem ersten Volumenspeicherbehälter 25a ist wiederum eine Drossel 4 angeordnet. Die Kolbenpumpe weist vorliegend insgesamt vier Einzelpumpen 12a, 12b, 12c, 12d auf, wobei die Pumpen 12a, 12b und die Pumpen 12c, 12d saugseitig jeweils an eine Hauptrohrleitung 10 angeschlossen sind. Die beiden Hauptrohrleitungsabschnitte 10 sind auf Seiten einer rein schematisch dargestellten Speisepumpe 24 mit einem gemeinsamen einlassseitigen Windkessel 21 verbunden. Der Windkessel 21 ist dabei wie der in Figur 4 schematisch gezeigte Windkessel 21 aufgebaut. An einem dem Windkessel 21 jeweils gegenüberliegenden axialen Ende der Hauptrohrleitungen 10 ist jeweils das einlassseitige Dämpfungssystem 101 bzw. 103 angeordnet.

Der Windkessel 21, insbesondere ein in dem Windkessel oben angeordnetes Gasvolumen 15a, kann wiederum über eine vorliegend nicht dargestellte Verbindungsleitung 23 mit dem Volumenspeicherbehälter 25a und/oder 25c, insbesondere mit einem darin in einem oberen Bereich angeordneten Gasvolumen 15b, fluidisch verbunden sein.

Auslassseitig der Pumpen 12a, 12b, 12c, 12d ist ein gemeinsames Sammelrohr 18 vorgesehen, welches etwa mittig eine das Fördermedium 20 an eine nicht dargestellte weitere Komponente, wie beispielsweise einen auslassseitigen Windkessel, leitende Rohrleitung 19 aufweist. An den beiden axialen Enden des Sammelrohrs 18 sind vorliegend jeweils die auslassseitigen Dämpfungssysteme 102, 104 angeordnet. Dadurch können auch auslassseitig auftretende Pulsationen besonders effektiv gedämpft werden.

In der Figur 7 ist eine Detailansicht einer Ausgestaltung eines erfindungsgemäßen Pulsationsdämpfungssystems 100 am Beispiel einer Anwendung an einem Verteilerrohr 10 gezeigt. Selbstverständlich kann diese Anordnung gleichermaßen auch an einem Sammlerohr 18 vorgesehen sein. Wie bereits weiter oben, insbesondere zu Figur 1 ausführlich erläutert, umfasst das Pulsationsdämpfungssystem 100 einen Volumenänderungskörper 1, der vorliegend in einem Verteilerrohr 10 mit einem Sauganschluss 13 und zwei Pumpeneinlässen 11a, 11b angeordnet und im Wesentlichen durch eine biegeweiche elastische Hülle oder Membran 7 gebildet ist. Insbesondere wird von der Membran 7 ein Membranraum 8 aufgespannt, sowie eine Trennung des zu pumpenden Fördermediums 20 von einem weiteren, innerhalb der geschlossenen Membran 7 angeordneten Sperrfluid 6 bewirkt. Durch die elastische Ausgestaltung der Membran 7 ist der Volumenänderungskörper 1 insbesondere derart ausgebildet, dass das von der Membran 7 umgebende Volumen betragsmäßig verändert werden kann, das heißt dass der Volumenänderungskörper 1 - je nach an der Membran 7 herrschender Druckdifferenz - alternierend verkleinert und vergrößert werden kann. Insbesondere zum Fixieren der Membran 7 ist vorliegend ein Träger 9a mit einem axialen Endstück 9b vorgesehen. Das Sperrfluid 6 kann sich vorliegend frei um den Träger 9a ausbilden.

Zwischen dem Membranraum 8 und einem Volumenspeicherbehälter 25 ist eine relativ kurze Nebenrohrleitung 3 mit einer darin angeordneten Drossel 4 angeordnet. Das Sperrfluid 6 kann somit - je nach Druckverhältnissen - durch die Nebenrohrleitung 3 von dem Membranraum 8 in den Volumenspeicherbehälter 25, und umgekehrt, strömen. In dem Volumenspeicherbehälter 25 bildet sich aufgrund der Druckverhältnisse eine Füllstandshöhe 17 aus, welche über ein Schauglas 29 von außen ablesbar ist. Ein oberhalb der Füllstandslinie 17 ausgebildeter Druck des Gasvolumens 15b kann über ein Manometer 30 ermittelt und ausgegeben werden.

Es sollte deutlich sein, dass der Schutzbereich der vorliegenden Erfindung nicht auf die beschriebenen Ausführungsbeispiele begrenzt ist, sondern durch die beigefügten Ansprüche definiert ist. Insbesondere die Anwendung, die Anordnung und der Aufbau des Pulsationsdämpfungssystems können - ohne den Kern der Erfindung zu verändern - durchaus modifiziert sein. So ist beispielsweise die Anwendung des Pulsationsdämpfungssystems zur Dämpfung von Pulsationen nicht auf Systeme, welche eine Pumpe aufweisen, beschränkt, sondern ist für jegliche Druckräume, wie Rohrleitungen, in denen eine störende Druckpulsation vorherrschen kann, geeignet.

### Bezuaszeichenliste:

- 1: Volumenänderungskörper
- 2: Volumenspeicherbehälter
- 3: Nebenrohrleitung
- 3a: Nebenrohrleitungsabschnitt, Ableitung
- 3b: Nebenrohrleitungsabschnitt, Zuleitung
- 3c: Nebenrohrleitungsabschnitt, Ab- und Zuleitung
- 4: Drosselventil
- 4a: Drosselventil
- 4b: Drosselventil
- 5a: Rückschlagventil
- 5b: Rückschlagventil
- 6: Sperrfluid
- 7: Hülle, Membran
- 8: Sperrdruckraum
- 8a: Sperrdruckraumbereich, Kammer
- 8b: Sperrdruckraumbereich
- 8c: Sperrdruckraumbereich
- 9: Strömungsleiteinrichtung, Trennwand
- 9a: Träger
- 10: Hauptrohrleitung, Verteilerrohr
- 11: Ableitung, Pumpeneinlass
- 11a: Ableitung, Pumpeneinlass
- 11b: Ableitung, Pumpeneinlass
- 11c: Ableitung, Pumpeneinlass
- 12: Pumpe
- 12a: Pumpe
- 12b: Pumpe
- 12c: Pumpe
- 13: Sauganschluss
- 14: Speicher, Behälter
- 15: Gasvolumen
- 15a: Gasvolumen
- 15b: Gasvolumen
- 16: Druckregelventil
- 17: Membran, Füllstandshöhe
- 18: Sammelrohr
- 19: Rohrleitung
- 20: Fördermedium
- 20a: Fördermediumbereich
- 21: Windkessel
- 21a: Windkessel
- 21b: Windkessel
- 22: Druckregelventil
- 23: Verbindungsleitung
- 23a: Verbindungsleitung
- 23b: Verbindungsleitung
- 24: Speisepumpe
- 25: Volumenspeicherbehälter
- 25a: Volumenspeicherbehälter
- 25b: Volumenspeicherbehälter
- 26: Kühlmedium-Zuleitung, Einlass
- 27: Kühlmedium-Ableitung, Auslass
- 28: Wärmetauscher
- 29: Schauglas
- 30: Manometer
- 100: Pulsationsdämpfungssystem
- 101: erstes Pulsationsdämpfungssystem
- 102: zweites Pulsationsdämpfungssystem
- 103: drittes Pulsationsdämpfungssystem
- 104: viertes Pulsationsdämpfungssystem

## Patentansprüche

1. Pulsationsdämpfungssystem (100, 101, 102, 103, 104) zum Reduzieren von Druckschwingungen in Rohrleitungen, insbesondere im Ansaug- und/oder Hochdruckbereich von Kolbenpumpen, mit
- einem in einer Hauptrohrleitung (10, 18) angeordneten Volumenänderungskörper (1), und
- einem mit dem Volumenänderungskörper (1) über zumindest eine von der Hauptrohrleitung (10, 18) fluidisch getrennte Nebenrohrleitung (3, 3a, 3b, 3c) fluidisch verbundenen Volumenspeicherbehälter (2, 25),
**dadurch gekennzeichnet, dass**
in der zumindest einen Nebenrohrleitung (3, 3a, 3b, 3c) zumindest ein Drosselventil (4, 4a, 4b) angeordnet ist.

2. System nach Anspruch 1, **dadurch gekennzeichnet, dass**
die Nebenrohrleitung (3, 3a, 3b, 3c) einen als Ableitung dienenden ersten Nebenrohrleitungsabschnitt (3a), einen separat ausgebildeten als Zuleitung dienenden zweiten Nebenrohrleitungsabschnitt (3b) und/oder einen separat ausgebildeten als Zu- und Ableitung dienenden dritten Nebenrohrleitungsabschnitt (3c) aufweist.

3. System nach einem der Ansprüche 1 oder 2, **dadurch gekennzeichnet, dass**
in der zumindest einen Nebenrohrleitung (3, 3a, 3b, 3c) zusätzlich ein Rückschlagventil (5a, 5b) angeordnet ist.

4. System nach einem der voranstehenden Ansprüche, **dadurch gekennzeichnet, dass**
der Volumenänderungskörper (1) als eine Trennvorrichtung zum fluidischen Trennen eines in der Hauptrohrleitung (10, 18) befindlichen Fördermediums (20) und eines mit dem Volumenspeicherbehälter (2, 25, 25a, 25b, 25c, 25d) fluidisch verbundenen und in einem Sperrdruckraum (8, 8a, 8b, 8c) befindlichen Sperrfluids (6) ausgebildet ist.

5. System nach einem der voranstehenden Ansprüche, **dadurch gekennzeichnet, dass**
der Volumenänderungskörper (1) zumindest teilweise eine innerhalb der Hauptrohrleitung (10, 18) angeordnete und einen Teil eines das Sperrfluid (6) aufweisenden Sperrdruckraums (8, 8a, 8b, 8c) bildende Kammer (8a) umgibt, dessen Raumvolumen in Abhängigkeit eines in der Hauptrohrleitung (10, 18) anliegenden Drucks mittels des Volumenänderungskörper (1) vergrößerbar, verkleinerbar oder verlagerbar ist.

6. System nach einem der voranstehenden Ansprüche, **dadurch gekennzeichnet, dass**
der Volumenänderungskörper (1) als ein Verdrängungskörper ausgebildet ist, dessen Verdrängungsvolumen elastisch veränderbar ist.

7. System nach einem der voranstehenden Ansprüche, **dadurch gekennzeichnet, dass**
der Volumenänderungskörper (1) eine flexible und elastisch verformbare Hülle (7) umfasst, wobei die Hülle (7) eine Kammer (8a) umgibt, die fluidisch mit der zumindest einen Nebenrohrleitung (3, 3a, 3b, 3c) verbunden ist, und in der Kammer (8a) eine Strömungsleiteinrichtung (9) zur Lenkung des innerhalb der Kammer (8a) strömenden Sperrfluids (6) angeordnet ist.

8. System nach einem der voranstehenden Ansprüche, **dadurch gekennzeichnet, dass**
der Volumenänderungskörper (1) stromaufwärts und/oder stromabwärts einer Pumpe oder einer Pumpenanordnung (12, 12a, 12b, 12c) angeordnet ist.

9. System nach einem der voranstehenden Ansprüche, **dadurch gekennzeichnet, dass**
in dem Volumenspeicherbehälter (2, 25, 25a, 25b, 25c, 25d) ein Sperrfluid (6) und zusätzlich ein Gasvolumen (15, 15b) angeordnet sind.

10. System nach einem der voranstehenden Ansprüche, **dadurch gekennzeichnet, dass**
die Hauptrohrleitung (10, 18) stromaufwärts des Volumenänderungskörpers (1) mit einem Windkessel (21, 21a, 21b) fluidisch verbunden ist, wobei in dem Windkessel (21, 21a, 21b) das Fördermedium (20) und ein Gasvolumen (15a) ausgebildet sind.

11. System nach Anspruch 10, **dadurch gekennzeichnet, dass** der Windkessel (21, 21a, 21b) über eine Verbindungsleitung (23, 23a, 23b) mit dem Volumenspeicherbehälter (2, 25, 25a, 25b, 25c, 25d) verbunden ist.

12. System nach einem der Ansprüche 9 bis 11, **dadurch gekennzeichnet, dass**
zum Steuern oder Regeln des Gasvolumens (15, 15a, 15b) ein Druckregelventil (16, 22) vorgesehen ist.

13. System nach einem der voranstehenden Ansprüche, **dadurch gekennzeichnet, dass**
der Volumenspeicherbehälter (2, 25) einen Wärmetauscher (28) umfasst.

14. System nach Anspruch 13, **dadurch gekennzeichnet, dass** der Wärmetauscher (28) von einem separaten Kühlmedium durchströmbar ist.

15. System nach einem der voranstehenden Ansprüche, **dadurch gekennzeichnet, dass**
ein erster Windkessel (21a) über eine erste Verbindungsleitung (23a) mit zumindest einem ersten Volumenspeicherbehälter (2, 25a, 25b) und ein zweiter Windkessel (21b) über eine separate zweite Verbindungsleitung (23b) mit zumindest einem zweiten Volumenspeicherbehälter (2, 25c, 25d) verbunden ist.

## Claims

1. A pulsation damping system (100, 101, 102, 103, 104) for reducing pressure oscillations in pipelines, in particular in the suction and/or high-pressure area of piston pumps, with
- a volume modification body (1) arranged in a main pipeline (10, 18) and
- a volume storage container (2, 25) which is fluidically connected to the volume modification body (1) via at least one auxiliary pipeline (3, 3a, 3b, 3c) which is fluidically separated from the main pipeline (10, 18),
**characterized in that**
at least one throttle valve (4, 4a, 4b) is arranged in the at least one auxiliary pipeline (3, 3a, 3b, 3c).

2. A system according to claim 1, **characterized in that**
the auxiliary pipeline (3, 3a, 3b, 3c) has a first auxiliary pipeline section (3a) serving as discharge line, a separately designed second auxiliary pipeline section (3b) serving as supply line, and/or a separately designed third auxiliary pipeline section (3c) serving as discharge and supply lines.

3. A system according to any one of claims 1 or 2, **characterized in that** a return valve (5a, 5b) is additionally arranged in the at least one auxiliary pipeline (3, 3a, 3b, 3c).

4. A system according to any one of the preceding claims, **characterized in that**
the volume modification body (1) is designed as a separating device for fluidically separating a conveying medium (20) located in the main pipeline (10, 18), and a barrier fluid (6) fluidically connected to the volume storage container (2, 25, 25a, 25b, 25c, 25d) and located in a barrier pressure space (8, 8a, 8b, 8c).

5. A system according to any one of the preceding claims, **characterized in that**
the volume modification body (1) at least partially surrounds a chamber (8a) which is arranged within the main pipeline (10, 18) and which forms a part of a barrier pressure space (8, 8a, 8b, 8c) having the barrier fluid (6), the space volume of which can be increased, decreased or displaced by means of the volume modification body (1) depending on a pressure which is applied in the main pipeline (10, 18).

6. A system according to any one of the preceding claims, **characterized in that**
the volume modification body (1) is designed as a displacement body, the displacement volume of which is elastically modifiable.

7. A system according to any one of the preceding claims, **characterized in that**
the volume modification body (1) comprises a flexible and elastically deformable sleeve (7), wherein the sleeve (7) surrounds a chamber (8a), which is fluidically connected to the at least one auxiliary pipeline (3, 3a, 3b, 3c), and a flow guide device (9) for guiding the barrier fluid (6) flowing inside the chamber (8a) is arranged in the chamber (8a).

8. A system according to any one of the preceding claims, **characterized in that**
the volume modification body (1) is arranged upstream and/or downstream of a pump or a pump arrangement (12, 12a, 12b, 12c).

9. A system according to any one of the preceding claims, **characterized in that**
a barrier fluid (6) and additionally a gas volume (15, 15b) are arranged in the volume storage container (2, 25, 25a, 25b, 25c, 25d).

10. A system according to any one of the preceding claims, **characterized in that**
the main pipeline (10, 18), upstream of the volume modification body (1), is fluidically connected to an air vessel (21, 21a, 21b), wherein the conveying medium (20) and a gas volume (15a) are formed in the air vessel (21, 21a, 21b).

11. A system according to claim 10, **characterized in that** the air vessel (21, 21a, 21b) is connected to the volume storage container (2, 25, 25a, 25b, 25c, 25d) via a connection line (23, 23a, 23b).

12. A system according to any one of claims 9 to 11, **characterized in that** a pressure control valve (16, 22) is provided for controlling or regulating the gas volume (15, 15a, 15b).

13. A system according to any one of the preceding claims, **characterized in that**
the volume storage container (2, 25) comprises a heat exchanger (28).

14. A system according to claim 13, **characterized in that** a separate cooling medium is capable of flowing through the heat exchanger (28).

15. A system according to any one of the preceding claims, **characterized in that**
a first air vessel (21a) is connected to at least one first volume storage container (2, 25a, 25b) via a first connection line (23a), and a second air vessel (21b) is connected to at least one second volume storage container (2, 25c, 25d) via a separate second connection line (23b).

## Revendications

1. Système d'amortissement des pulsations (100, 101, 102, 103, 104) pour réduire les oscillations de pression dans les canalisations, en particulier dans la zone d'aspiration et / ou de haute pression de pompes à piston, avec
- un corps de changement de volume (1) disposé dans une canalisation principale (10, 18), et
- un réservoir de stockage de volume (2, 25) relié fluidiquement au corps de changement de volume (1) via au moins une canalisation secondaire (3, 3a, 3b, 3c) fluidiquement séparée de la canalisation principale (10, 18),
**caractérisé en**
**ce qu'**au moins un papillon des gaz (4, 4a, 4b) est disposé dans l'au moins une canalisation secondaire (3, 3a, 3b, 3c).

2. Système selon la revendication 1, **caractérisé en ce que** la canalisation secondaire (3, 3a, 3b, 3c) présente une première section de canalisation secondaire (3a) servant de décharge, une deuxième section de canalisation secondaire (3b) conçue séparément servant de canalisation d'alimentation et / ou une troisième section de canalisation secondaire (3c) conçue séparément servant d'entrée et de sortie.

3. Système selon l'une des revendications 1 ou 2, **caractérisé en ce qu'**au moins un clapet anti-retour (5a, 5b) est en outre disposé dans l'au moins une canalisation secondaire (3, 3a, 3b, 3c).

4. Système selon l'une des revendications précédentes, **caractérisé en ce que** le corps de changement de volume (1) est formée en tant que dispositif de séparation pour séparer fluidiquement un milieu de transport (20) situé dans la canalisation principale (10, 18) et un fluide barrière (6) relié fluidiquement au réservoir de stockage de volume (2, 25, 25a, 25b, 25c, 25d) et situé dans une chambre de pression barrière (8, 8a, 8b, 8c).

5. Système selon l'une des revendications précédentes, **caractérisé en ce que** le corps de changement de volume (1) entoure au moins partiellement une chambre (8a) disposée à l'intérieur de la canalisation principale (10, 18) et faisant partie d'une chambre de pression barrière (8, 8a, 8b, 8c) contenant le fluide barrière (6) et dont le volume en fonction d'une pression survenant dans la canalisation principale (10, 18) peut être agrandie, réduite ou déplacé au moyen du corps de changement de volume (1).

6. Système selon l'une des revendications précédentes, **caractérisé en ce que** le corps de changement de volume (1) est conçu comme un corps de déplacement dont le volume de déplacement peut être modifié élastiquement.

7. Système selon l'une des revendications précédentes, **caractérisé en ce que** le corps de changement de volume (1) comprend une coque flexible et élastiquement déformable (7), la coque (7) entourant une chambre (8a) reliée fluidiquement à l'au moins une canalisation secondaire (3, 3a, 3b, 3c), et un dispositif de guidage d'écoulement (9) pour guider le fluide barrière (6) circulant dans la chambre (8a) est disposé dans la chambre (8a).

8. Système selon l'une des revendications précédentes, **caractérisé en ce que** le corps de changement de volume (1) est disposé en amont et / ou en aval d'une pompe ou d'un agencement de pompe (12, 12a, 12b, 12c).

9. Système selon l'une des revendications précédentes, **caractérisé en ce qu'**un fluide barrière (6) et en plus un volume de gaz (15, 15b) sont agencés dans le réservoir de stockage de volume (2, 25, 25a, 25b, 25c, 25d).

10. Système selon l'une des revendications précédentes, **caractérisé en ce que** la conduite principale (10, 18) est reliée fluidiquement à une chaudière d'air (21, 21 a, 21b) en amont du corps de changement de volume (1), le moyen de transport (20) et un volume de gaz (15a) étant formés dans la chaudière d'air (21, 21a, 21b).

11. Système selon la revendication 10, **caractérisé en ce que** la chaudière d'air (21, 21a, 21b) est reliée au réservoir de stockage de volume (2, 25, 25a, 25b, 25c, 25d) via une ligne de liaison (23, 23a, 23b).

12. Système selon l'une des revendications 9 à 11, **caractérisé en ce qu'**une soupape de commande de pression (16, 22) est prévue pour commander ou réguler le volume de gaz (15, 15a, 15b).

13. Système selon l'une des revendications précédentes, **caractérisé en ce que** le réservoir de stockage de volume (2, 25) comprend un échangeur de chaleur (28).

14. Système selon la revendication 13, **caractérisé en ce qu'**un fluide de refroidissement séparé peut s'écouler à travers l'échangeur de chaleur (28).

15. Système selon l'une des revendications précédentes, **caractérisé en ce qu'**une première chaudière d'air (21a) est reliée avec au moins un premier réservoir de stockage de volume (2, 25a, 25b) via une première ligne de liaison (23a), et une deuxième chaudière d'air (21b) est reliée avec au moins un deuxième réservoir de stockage de volume (2, 25c, 25d) via une deuxième ligne de liaison séparée (23b).
